(19) **Europäisches Patentamt European Patent Office Office européen des brevets**

(11) **EP 4 449 076 B1**

(12) **FASCICULE DE BREVET EUROPEEN**

(45) Date de publication et mention de la délivrance du brevet:
**15.10.2025 Bulletin 2025/42**

(21) Numéro de dépôt: **22823034.8**

(22) Date de dépôt: **29.11.2022**

(51) Classification Internationale des Brevets (IPC):
**G01J 3/02** $^{(2006.01)}$ **G01J 3/42** $^{(2006.01)}$

(52) Classification Coopérative des Brevets (CPC):
**G01J 3/0202; G01J 3/0208; G01J 3/0229; G01J 3/0256; G01J 3/0286; G01J 3/0297; G01J 3/42;** G01J 2003/1213

(86) Numéro de dépôt international:
**PCT/EP2022/083682**

(87) Numéro de publication internationale:
**WO 2023/110391 (22.06.2023 Gazette 2023/25)**

(54) **SYSTEME OPTIQUE IMAGEUR A PLUSIEURS VOIES DISPOSEES EN PARALLELE ET OUVERTURE D'ENTREE COMMUNE**

OPTISCHES ABBILDUNGSSYSTEM MIT MEHREREN PARALLEL ANGEORDNETEN WEGEN UND GEMEINSAMER EINTRITTSÖFFNUNG

OPTICAL IMAGING SYSTEM WITH MULTIPLE PATHS ARRANGED IN PARALLEL AND A COMMON ENTRANCE APERTURE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **14.12.2021 FR 2113519**

(43) Date de publication de la demande:
**23.10.2024 Bulletin 2024/43**

(73) Titulaire: **Office National d'Etudes et de Recherches Aérospatiales 91120 Palaiseau (FR)**

(72) Inventeurs:
• **DRUART, Guillaume 91120 PALAISEAU (FR)**
• **DOMEL, Roland 91120 PALAISEAU (FR)**
• **MAS, Adrien 78180 MONTIGNY LE BRETONNEUX (FR)**
• **COMPAIN, Eric 78180 MONTIGNY LE BRETONNEUX (FR)**
• **FAVIER, Sylvain 78180 MONTIGNY LE BRETONNEUX (FR)**

(74) Mandataire: **IPAZ Bâtiment Platon Parc Les Algorithmes 91190 Saint-Aubin (FR)**

(56) Documents cités:
**FR-A1- 3 094 792     US-A1- 2021 344 851**

• **TANIDA J ET AL: "Thin observation module by bound optics (TOMBO): concept and experimental verification", APPLIED OPTICS, OPTICAL SOCIETY OF AMERICA, WASHINGTON, DC, US, vol. 40, no. 11, 10 April 2001 (2001-04-10), pages 1806 - 1813, XP002385636, ISSN: 0003-6935, DOI: 10.1364/AO.40.001806**

**Description**

**Domaine technique**

La présente description concerne un système optique imageur à plusieurs voies qui sont disposées en parallèle et à ouverture d'entrée qui est commune à toutes ces voies. Elle concerne aussi un procédé pour saisir plusieurs images qui sont associées à un champ optique d'entrée qui est le même pour toutes ces images.

**Technique antérieure**

De nombreux domaines nécessitent de détecter la présence d'un gaz spécifique dans une scène, ce gaz pouvant être invisible. Par exemple, une telle détection de gaz est utile dans l'industrie lorsque le gaz est toxique ou polluant, et/ou pour rechercher la présence éventuelle d'une fuite du gaz dans des installations de transfert ou d'utilisation de ce gaz. En particulier, il est ainsi souvent utile de détecter la présence d'un gaz d'hydrocarbure dans des installations industrielles. La détection de gaz dans une scène est aussi utile pour des applications militaires, notamment pour rechercher la présence éventuelle de gaz de combat dans une zone d'intervention.

En général, les gaz concernés possèdent des bandes d'absorption caractéristiques dans le domaine spectral compris entre 3 $\mu$m (micromètre) et 5 $\mu$m, couramment désigné par domaine infrarouge moyen ou MWIR, ou entre 8 $\mu$m et 14 $\mu$m, couramment désigné par infrarouge lointain ou LWIR. Des systèmes optiques imageurs qui incorporent des lentilles à base de germanium (Ge) sont alors souvent utilisés pour détecter optiquement le gaz, mais d'autres matériaux qui sont aussi transparents dans le domaine spectral voulu peuvent être utilisés alternativement pour de tels systèmes. Mais ces matériaux, y compris le germanium, ont leurs propriétés optiques qui varient fortement en fonction de l'évolution thermique de l'environnement. Il est alors connu d'utiliser des dispositifs de compensation thermique, aussi appelés dispositifs d'athermalisation, pour que les images qui sont saisies restent nettes quelle que soit la température d'utilisation du système à l'intérieur d'un intervalle thermique de prescription.

En outre, il est aussi connu d'équiper un système optique imageur d'un écran de vignettage. Un tel écran de vignettage a usuellement pour fonction de supprimer de la lumière parasite qui pénètrerait sinon dans le système optique imageur selon des incidences très inclinées par rapport à l'axe optique du système, sans participer à la formation des images.

Par ailleurs, la détection sélective d'un gaz nécessite de mettre en œuvre plusieurs voies optiques en parallèle dans le système optique imageur qui est utilisé, ces voies optiques étant fonctionnelles dans des fenêtres spectrales qui sont différentes d'une voie optique à une autre. Il est ainsi possible d'identifier le gaz ou la famille du gaz qui est présent dans la scène, d'après son rendu d'image pour toutes les fenêtres spectrales. Mais un enjeu est alors de disposer de systèmes optiques imageurs à voies multiples qui soient peu encombrants, peu lourds, faciles à fabriquer, notamment en ce qui concerne l'alignement de leurs composants optiques, et qui soient opérationnelles dans des intervalles de température d'utilisation suffisamment grands.

Une architecture qui présente de nombreux avantages pour de tels systèmes optiques imageurs est décrite dans l'article de J. Tanida et al., intitulé «Thin observation module by bound optics (TOMBO) : concept and experimental verification», Appl. Opt., vol. 40, pp. 1806-1813 (2001). Un tel système TOMBO comprend :

- un capteur d'images matriciel ; et
- une matrice imageante, comprenant plusieurs optiques imageantes qui sont disposées en parallèle et adaptées pour former simultanément, dans des zones utiles du capteur d'images matriciel qui sont dédiées une-à-une aux optiques imageantes, des images respectives d'une scène contenue dans un champ optique d'entrée qui est identique pour toutes ces optiques imageantes, les zones utiles du capteur d'images matriciel étant disjointes et chaque optique imageante avec la zone utile correspondante appartenant à une des voies optiques du système séparément de chaque autre voie optique.

Pour éviter qu'une image qui est destinée à être saisie dans une des zones utiles déborde au-delà de la limite périphérique de cette zone utile dans une zone utile voisine, il est connu d'utiliser des parois de séparation entre les voies optiques. Le document US 10,375,327 B2, ou US 2018/0191967 A1, décrit de tels systèmes TOMBO à parois de séparation entre voies optiques voisines, pour l'application de détection de gaz. De telles parois de séparation, qui sont opaques et couramment appelées murets, sont disposées longitudinalement entre des voies optiques qui sont voisines, au niveau de la matrice imageante en s'étendant jusqu'au capteur d'images matriciel. Mais elles présentent les inconvénients suivants :

- lorsque ces parois de séparation s'étendent à travers toute la matrice imageante, les lentilles de cette dernière ne peuvent plus être réalisées sous forme de matrices monoblocs de lentilles, et à cause de cela des alignements doivent être réalisés voie optique par voie optique, ce qui est fastidieux et complexe, et qui augmente le prix de revient du système dans une mesure importante ; et

- de telles parois de séparation sont surtout efficaces pour empêcher des recouvrements d'images entre voies optiques voisines lorsqu'elles s'étendent jusqu'à près ou très près de la surface du capteur d'images matriciel. Mais pour les domaines spectraux MWIR et LWIR, le capteur d'images matriciel est contenu dans une enceinte à pression réduite, de sorte qu'un hublot de cette enceinte est nécessairement présent entre la matrice imageante et le capteur d'images matriciel. Pour cette raison, les parois de séparation se terminent au niveau du hublot, et donc à distance du capteur d'images matriciel, et à cause de cela leur efficacité à éviter les recouvrements d'images entre voies optiques voisines est insuffisante.

Aussi pour éviter de tels recouvrements d'images à l'intérieur de chaque zone utile, tels que résultant de débordements de chaque image au-delà de la limite périphérique de la zone utile qui est dédiée à cette image, il est encore connu de prévoir des bandes de garde («clearance bands» en anglais) entre zones utiles qui sont voisines à l'intérieur du capteur d'images matriciel. Ces bandes de garde sont dimensionnées pour que chaque débordement de l'une quelconque des images dans une des bandes de garde en direction d'une zone utile voisine soit plus court qu'une largeur de cette bande de garde, pour n'importe quelle valeur de la température du système dans l'intervalle de prescription. En général, les zones utiles sont déterminées par des sélections de lecture du capteur d'images matriciel lors de chaque séquence de saisie d'image, restreintes à ceux des photodétecteurs qui appartiennent à une des zones utiles. Mais de telles bandes de garde provoquent une sous-utilisation du capteur d'images.

Encore pour limiter ou supprimer les chevauchements entre images qui sont formées par des voies optiques voisines, il est possible d'écarter latéralement les voies optiques les unes par rapport aux autres. Mais il en résulte de nouveau une sous-utilisation du capteur d'images.

Enfin, augmenter la distance entre la matrice imageante et le capteur d'images matriciel pour réduire les chevauchements entre images qui sont formées par des voies optiques voisines empêche le système d'être compact. Or il existe un enjeu important pour de tels systèmes optiques imageurs à être compacts, par exemple pour être facilement transportables par un opérateur ou par un véhicule autonome, notamment un drone, ou encore pour être montés sur une tourelle orientable.

US2012/344851 divulgue un exemple de l'état de la technique.

**Problème technique**

A partir de cette situation, un but de la présente invention est de fournir un système TOMBO athermalisé pour lequel les chevauchements d'images sont supprimés dans toutes les zones utiles du capteur d'images matriciel.

Des buts annexes de l'invention sont que le système soit peu encombrant, peu lourd, facile à fabriquer, notamment en ce qui concerne l'alignement de ses composants optiques, et qu'il puisse posséder un large champ de vue avec une grande ouverture. En effet, le champ de vue large permet de détecter une fuite à l'intérieur d'une scène qui est étendue latéralement, et la grande ouverture permet d'augmenter un rapport signal-sur-bruit des images qui sont saisies.

**Résumé de l'invention**

Pour atteindre l'un au moins de ces buts ou un autre, un premier aspect de l'invention propose un nouveau système optique imageur à plusieurs voies optiques disposées en parallèle, du type système TOMBO tel que rappelé plus haut. Il comprend donc un capteur d'images matriciel et une matrice imageante selon l'agencement précité. Le système optique imageur de l'invention comprend en outre :

- un dispositif de compensation thermique, disposé pour produire un écartement variable entre la matrice imageante et le capteur d'images matriciel, et comprenant, dans au moins un plan de section longitudinale qui est perpendiculaire à la matrice imageante et au capteur d'images matriciel, un méandre composé de deux segments constitués chacun au moins en partie par un matériau dont une valeur de coefficient de dilatation thermique est différente de celle pour l'autre segment, les deux segments étant reliés l'un à l'autre par des extrémités distales respectives de ceux-ci, une extrémité proximale de l'un des segments étant reliée à la matrice imageante et une extrémité proximale de l'autre des segments étant reliée au capteur d'images matriciel, une différence entre les valeurs de coefficient de dilatation thermique et des longueurs respectives des deux segments étant adaptées pour produire l'écartement variable entre la matrice imageante et le capteur d'images matriciel de sorte que les images qui sont formées dans les zones utiles du capteur d'images matriciel soient nettes lorsque la température du système a une valeur quelconque à l'intérieur de l'intervalle de prescription ; et

- un écran de vignettage («baffle» en anglais), disposé en amont de la matrice imageante par rapport à un sens de propagation d'un rayonnement qui entre dans le système pour former les images, l'écran de vignettage possédant une ouverture pour le rayonnement qui est commune aux voies optiques du système.

Selon une première caractéristique additionnelle de l'invention, l'ouverture de l'écran de vignettage est dimensionnée pour limiter latéralement un éclairement dans chaque image qui est formée par l'une quelconque des voies optiques, dite voie optique considérée, afin d'éviter que cette image déborde dans la zone utile d'une autre des voies optiques, voisine de la voie optique considérée. De cette façon, toute superposition d'images est empêchée dans toutes les zones utiles, pour n'importe quelle valeur de la température du système dans l'intervalle de prescription.

Selon une seconde caractéristique additionnelle de l'invention, les extrémités distales des segments du dispositif de compensation thermique sont situées en amont de la matrice imageante par rapport au sens de propagation du rayonnement qui entre dans le système pour former les images. En outre, l'écran de vignettage est supporté par le dispositif de compensation thermique en amont de la matrice imageante, encore par rapport au sens de propagation du rayonnement qui entre dans le système pour former les images. De préférence, l'écran de vignettage peut être supporté par le dispositif de compensation thermique au niveau des extrémités distales des segments de ce dispositif de compensation thermique.

Ainsi, l'écran de vignettage est supporté par le dispositif de compensation thermique. Autrement dit, l'invention propose de combiner deux fonctions pour le dispositif de compensation thermique. La première fonction consiste à adapter la distance entre la matrice imageante et le capteur d'images matriciel conformément aux variations des caractéristiques optiques de la matrice imageante, essentiellement sa longueur focale, en fonction de la température. De cette façon, les images qui sont saisies par le capteur d'images matriciel restent nettes dans tout l'intervalle de prescription, celui-ci pouvant être grand. La seconde fonction du dispositif de compensation thermique consiste à supporter l'écran de vignettage. Une telle combinaison de fonctions est particulièrement efficace pour obtenir un système qui soit compact. En particulier, la fonction additionnelle de support de l'écran de vignettage, introduite par l'invention, n'impose pas nécessairement de rallonger le méandre du dispositif de compensation thermique, par rapport à sa longueur nécessaire pour la fonction d'athermalisation. Selon l'invention, les matériaux respectifs des deux segments du dispositif de compensation thermique sont choisis pour produire la fonction d'athermalisation et aussi pour supporter l'écran de vignettage à une position qui supprime les chevauchements d'images dans les zones utiles du capteur d'images matriciel.

Grâce à l'invention, l'utilisation de parois de séparation entre les voies optiques n'est plus indispensable. La matrice imageante peut alors être constituée par des matrices monoblocs de lentilles, si bien que l'alignement optique de l'ensemble du système est simple.

Aussi grâce à l'absence de parois de séparation, un hublot peut être inséré entre la matrice imageante et le capteur d'images matriciel, notamment un hublot d'enceinte à pression réduite lorsque le capteur d'images nécessite une telle enceinte pour son fonctionnement.

De façon générale, lorsque celles des zones utiles qui sont alignées entre deux bords opposés du capteur d'images matriciel sont comptées progressivement à partir d'un de ces bords, l'ouverture de l'écran de vignettage et la distance entre cet écran de vignettage et la matrice imageante peuvent être dimensionnées de sorte que le débordement dans la bande de garde qui est intermédiaire entre les première et seconde zones utiles, de l'image correspondant à la deuxième zone utile soit limité par l'écran de vignettage de façon à s'arrêter à une limite entre la bande de garde et la première zone utile. Alternativement, l'ouverture de l'écran de vignettage et la distance entre cet écran de vignettage et la matrice imageante peuvent être dimensionnées de sorte que le débordement dans la bande de garde qui est intermédiaire entre les première et seconde zones utiles, de l'image correspondant à la première zone utile soit limité par l'écran de vignettage de façon à s'arrêter à une limite entre la bande de garde et la deuxième zone utile. Il s'agit là d'une condition de non-recouvrement entre images de voies optiques voisines, exprimée pour la bande de garde qui est la plus externe latéralement.

Dans des modes préférés de réalisation de l'invention, l'une au moins des caractéristiques additionnelles suivantes peut être reproduite optionnellement, seule ou en combinaison de plusieurs d'entre elles :

- une distance de séparation entre l'écran de vignettage et la matrice imageante, mesurée parallèlement à une direction commune d'axes optiques respectifs des optiques imageantes, peut être comprise entre 1,0 fois et 6,0 fois une valeur moyenne des longueurs focales des optiques imageantes ;
- le système optique imageur peut comprendre en outre une enceinte qui est disposée pour contenir le capteur d'images matriciel, cette enceinte étant munie d'un hublot qui est transparent au rayonnement qui forme les images, et qui est situé entre la matrice imageante et le capteur d'images matriciel ;
- les optiques imageantes peuvent avoir un agencement en lignes et colonnes dans la matrice imageante, chaque ligne étant perpendiculaire à chaque colonne, et la matrice imageante peut alors être orientée de sorte que chaque ligne d'optiques imageantes soit parallèle à une direction de ligne ou de colonne de photodétecteurs du capteur d'images matriciel ;
- l'agencement en lignes et colonnes des optiques imageantes dans la matrice imageante peut être de l'une des dimensions suivantes : 1 x 2, 2 x 1, 2 x 2, 2 x 3, 3 x 2, 3 x 3, 2 x 4, 4 x 2, 3 x 4, 4 x 3 et 4 x 4. Toutefois, un nombre limité de voies optiques peut être préféré, pour ne pas nécessiter des bandes de garde qui soient trop larges lorsqu'elles sont très décalées par rapport à un axe optique central de la matrice imageante ;

- lorsque l'agencement en lignes et colonnes de la matrice imageante comprend au moins trois optiques imageantes qui sont alignées selon une direction de ligne ou de colonne, alors deux quelconques des bandes de garde qui sont parallèles entre elles peuvent avoir des largeurs qui sont identiques ;
- chaque optique imageante peut comprendre au moins une lentille qui est à base de germanium ;
- la matrice imageante peut être constituée de matrices monoblocs de lentilles ;
- chaque optique imageante peut comprendre un filtre spectral, et les filtres spectraux de deux des optiques imageantes qui sont distinctes dans la matrice imageante peuvent déterminer des fenêtres de transmission spectrale qui sont différentes ;
- le filtre spectral de chaque optique imageante peut être situé entre deux lentilles de cette optique imageante, notamment pour éviter des images parasites qui seraient issues de réflexions multiples entre ce filtre spectral et le capteur d'images matriciel, et pour éviter d'augmenter la distance entre la matrice imageante et le capteur d'images matriciel ;
- le nombre d'ouverture, couramment noté F#, de chaque voie optique du système optique imageur peut être compris entre 0,9 et 1,5, correspondant à des valeurs importantes de diamètre pupillaire. De telles valeurs d'ouverture, associées au fait que le diamètre des optiques doit être inférieur ou égal à la taille individuelle de leurs zones d'images allouées sur le détecteur conformément à l'architecture TOMBO, peuvent avantageusement être obtenues en utilisant des matériaux à valeurs élevées d'indice de réfraction, tels que le germanium. Mais ces matériaux ont en général une sensibilité thermique plus grande que des matériaux à plus faibles valeurs d'indice de réfraction, comme les verres en chalcogénures. Le dispositif de compensation thermique prévu par l'invention est alors encore plus avantageux ;
- le champ de vue utile, couramment noté FOV, de chaque voie optique peut être compris entre 20° (degré) et 60°, correspondant à des champs de vue larges ou très larges ; et
- l'intervalle thermique de prescription peut posséder une longueur supérieure ou égale à 60°C (degré Celsius), de préférence supérieure ou égale à 80°C. De façon générale, l'intervalle thermique de prescription est inscrit sur le système optique imageur, ou peut être indiqué dans une notice matérielle ou électronique qui est fournie avec ce système.

Un second aspect de l'invention propose un procédé pour saisir plusieurs images associées à un champ optique d'entrée qui est identique pour toutes ces images, ce procédé étant mis en œuvre en utilisant un système optique imageur qui est conforme au premier aspect de l'invention.

Un tel procédé peut être destiné à révéler une présence d'un gaz à l'intérieur du champ optique d'entrée. Dans ce cas, chaque voie optique est munie d'un filtre spectral comme indiqué plus haut, et les filtres spectraux peuvent avantageusement être sélectionnés de sorte que la fenêtre de transmission spectrale d'au moins un des filtres spectraux soit dans une bande de transparence du gaz, et la fenêtre de transmission spectrale d'au moins un autre des filtres spectraux soit dans une bande d'absorption du gaz.

En particulier, le gaz recherché par un tel procédé peut être du gaz naturel, un gaz d'hydrocarbure(s), un gaz toxique, par exemple du sulfure d'hydrogène ($H_2S$) ou du monoxyde de carbone (CO), ou un gaz à effet de serre, notamment du dioxyde de carbone ($CO_2$).

**Brève description des figures**

Les caractéristiques et avantages de la présente invention apparaîtront plus clairement dans la description détaillée ci-après d'exemples de réalisation non-limitatifs, en référence aux figures annexées parmi lesquelles :

[Fig. 1] est une vue en coupe d'une partie d'un système optique imageur conforme à l'invention ;

[Fig. 2] montre des rayons lumineux utiles pour une voie optique du système optique imageur de [Fig. 1] ;

[Fig. 3] est une vue en perspective d'un support d'assemblage de voies optiques, qui peut être utilisé dans le système optique imageur de [Fig. 1] ;

[Fig. 4] est une vue en perspective extérieure du système optique imageur de [Fig. 1] ;

[Fig. 5a] montre plusieurs voies optiques du système optique imageur de [Fig. 1], qui sont juxtaposées dans un plan de section longitudinale ;

[Fig. 5b] montre des paramètres de dimensionnement thermiques et géométriques du système optique imageur de [Fig. 1], dans le plan de section longitudinale de [Fig. 5a] ; et

[Fig. 5c] correspond à [Fig. 5a] pour montrer des paramètres de dimensionnement optiques et géométriques du système optique imageur de [Fig. 1].

**Description détaillée de l'invention**

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques.

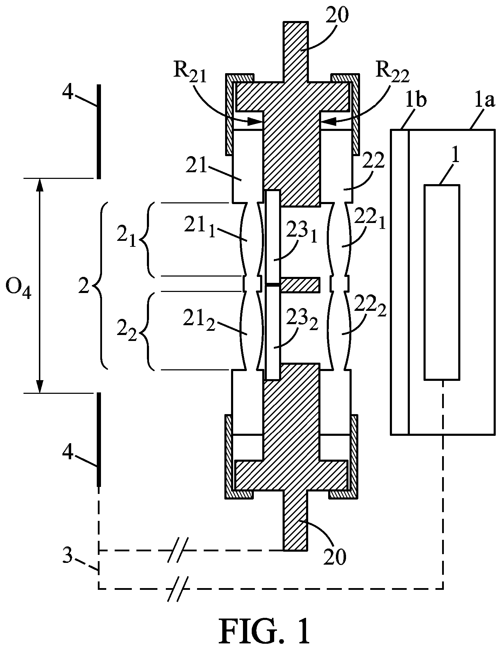

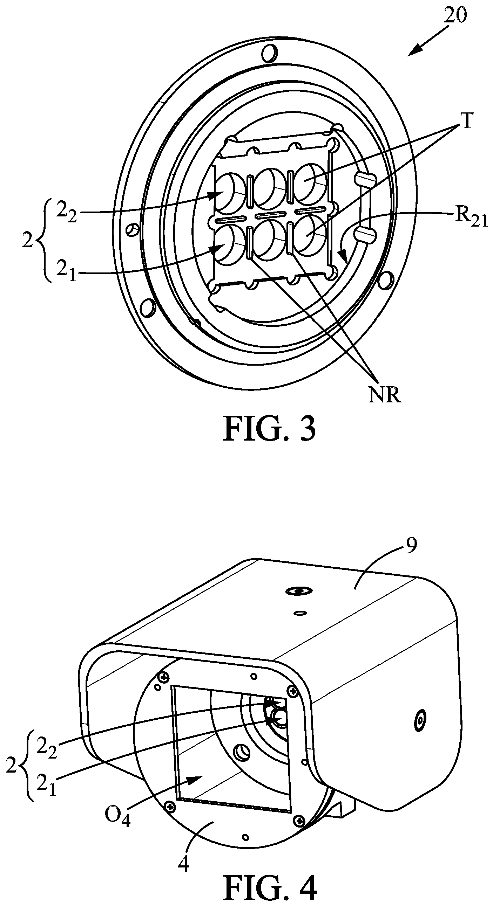

Le mode de réalisation de l'invention qui est décrit maintenant en référence à [Fig. 1]-[Fig. 4] comporte une matrice 2 x 3 de voies optiques juxtaposées. La référence 2 désigne globalement cette matrice de voies optiques, qui a été appelée matrice imageante dans la partie générale de la présente description. [Fig. 1] montre les éléments suivants du système optique imageur :

- un capteur d'images matriciel, qui est désigné par la référence 1 ;
- deux des voies optiques, qui sont juxtaposées et désignées par les références $2_1$ et $2_2$, respectivement ;
- la liaison mécanique entre le capteur d'images matriciel 1 et la matrice imageante 2, qui est représentée de façon symbolique en traits interrompus et constituée par un dispositif de compensation thermique 3 ; et
- un écran de vignettage 4.

Le capteur d'images matriciel 1 peut être d'un type à bolomètres ou microbolomètres qui sont disposés selon une matrice de lignes et de colonnes, par exemple 1024 colonnes par 768 lignes. Avantageusement, il peut être d'un type opérationnel sans système de refroidissement. Ce capteur d'images matriciel 1 est contenu dans une enceinte à pression réduite 1a, cette dernière étant munie d'un hublot 1b qui est transparent pour les rayonnements destinés à être détectés par le capteur d'images matriciel 1. Par exemple, et notamment pour des applications de détection de gaz, le domaine spectral de sensibilité du capteur d'images matriciel 1 peut comprendre l'un au moins des deux intervalles suivants de longueur d'onde : 3 $\mu$m - 5 $\mu$m et 8 $\mu$m - 14 $\mu$m.

Dans un tel mode de réalisation, toutes les voies optiques peuvent avoir des constitutions qui sont similaires, et chaque voie optique peut comprendre deux lentilles et un filtre spectral. Ainsi, la voie optique $2_1$ peut comprendre les lentilles $21_1$ et $22_1$, ainsi que le filtre spectral $23_1$, et la voie optique $2_2$ peut comprendre les lentilles $21_2$ et $22_2$, ainsi que le filtre spectral $23_2$, et de même pour les autres voies optiques du système. Avantageusement, les lentilles $21_1$ et $21_2$, ainsi que leurs homologues des autres voies optiques du système, peuvent être formées en une seule pièce de matériau transparent, par exemple de germanium, pour constituer une première matrice de lentilles 21. De même, les lentilles $22_1$ et $22_2$, ainsi que leurs homologues des autres voies optiques du système, peuvent être formées en une seule autre pièce de matériau transparent, pouvant aussi être en germanium, pour constituer une seconde matrice de lentilles 22. Une telle conception de l'ensemble des voies optiques du système optique imageur facilite l'alignement optique de tout le système, grâce au fait que les lentilles sont directement fabriquées en étant parallèles entre elles au sein de chaque matrice de lentilles. De préférence, la matrice imageante 2 est orientée de sorte que ses lignes ou colonnes de voies optiques soient parallèles aux lignes de bolomètres ou microbolomètres dans le capteur d'images matriciel 1.

Les voies optiques sont distinguées entre elles par leurs filtres spectraux respectifs, qui possèdent des fenêtres de transmission différentes les unes des autres, toutes comprises dans le domaine spectral de sensibilité du capteur d'images matriciel 1. Ces fenêtres de transmission des filtres spectraux peuvent être sélectionnées en fonction d'un gaz à rechercher auquel le système optique imageur est dédié. L'Homme du métier sait alors sélectionner les filtres spectraux en fonction des bandes d'absorption et de transparence du gaz à rechercher.

Chaque voie optique conjugue une scène qui est contenue dans le champ optique d'entrée du système optique imageur, et qui est commune à toutes les voies optiques, avec une portion respective de la matrice du capteur d'images 1, appelée zone utile du capteur d'images matriciel pour cette voie optique. Ainsi, à chaque séquence de lecture, le capteur d'images matriciel 1 saisit simultanément toutes les images de la scène qui sont formées dans les zones utiles par toutes les voies optiques. Une telle architecture de système optique imageur à voies multiples est connue de l'art antérieur sous l'acronyme TOMBO, pour «Thin Observation Module by Bound Optics».

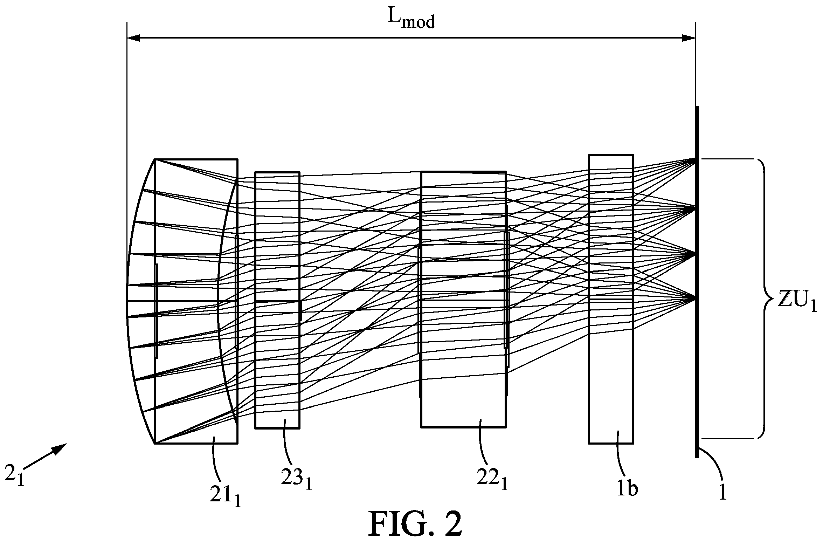

[Fig. 2] montre des rayons lumineux qui sont transmis par l'une des voies optiques, par exemple la voie optique $2_1$. La zone utile du capteur d'images matriciel 1 pour chaque voie optique peut être de 254 colonnes par 319 lignes par exemple, et deux des voies optiques qui sont voisines dans la matrice imageante 2 peuvent être séparées par 130 lignes ou colonnes de la matrice du capteur d'images 1. $ZU_1$ désigne la zone utile de la voie optique $2_1$. Pour un tel mode de réalisation, toutes les voies optiques peuvent avoir une longueur $L_{mod}$ de l'ordre de 13 mm (millimètre), mesurée entre la face antérieure de la matrice de lentilles 21 et la surface photosensible du capteur d'images matriciel 1.

Dans des réalisations particulièrement avantageuses du système optique imageur, certains des composants de ses voies optiques peuvent être supportés par un support d'assemblage 20 qui leur est commun, comme indiqué dans [Fig. 1]. Un exemple de tel support 20 est montré dans [Fig. 3]. Il est muni de trous T, par exemple cylindriques, qui sont affectés un-à-un aux voies optiques pour permettre le passage des rayons lumineux jusqu'au capteur d'images matriciel 1. Ces trous T sont séparés les uns des autres par des portions du matériau du support 20, qui est opaque pour le domaine spectral de sensibilité du capteur d'images matriciel 1. Ces portions de matériau opaque constituent des séparations longitudinales entre voies optiques voisines, c'est-à-dire des murets de séparation. De cette façon, de la lumière parasite qui serait susceptible de passer d'une voie optique à une voie optique voisine est supprimée. Enfin, des nervures en relief NR peuvent être prévues sur ces murets de séparation, d'un côté du support 20, pour maintenir en place les filtres spectraux respectifs des voies optiques. [Fig. 3] montre ainsi le support 20 par son côté qui est destiné à être orienté vers la scène à analyser, c'est-à-dire par son côté qui est opposé au capteur d'images matriciel 1 au sein du système. Le rebord $R_{21}$ est destiné à soutenir la matrice de lentilles 21, et un rebord similaire $R_{22}$ est prévu sur l'autre côté du support 20 pour soutenir la matrice de lentilles 22 en avant du capteur d'images matriciel 1 (voir [Fig. 1]). Des systèmes de calage et de centrage qui sont à la portée de l'Homme du métier peuvent être prévus en outre pour plaquer les matrices de lentilles 21 et 22 contre le support 20, au niveau des rebords $R_{21}$ et $R_{22}$ respectivement.

Le support 20 et l'écran de vignettage 4 sont visibles dans [Fig. 1] et [Fig. 4]. L'écran de vignettage 4 possède une ouverture d'entrée unique $O_4$ qui est commune à toutes les voies optiques, et par laquelle les rayons lumineux entrent dans le système pour toutes ces voies optiques, jusqu'à parvenir dans la zone utile qui correspond séparément à chacune d'entre elles sur le capteur d'images matriciel 1. Avantageusement, le système optique imageur peut être protégé sur sa partie supérieure par un écran thermique 9, couramment appelé casquette, pour éviter qu'il subisse des variations thermiques inhomogènes provoquées par des expositions temporaires au rayonnement solaire ou à des courants d'air froid. En effet, comme cela apparaîtra dans la suite, le dispositif de compensation thermique 3 qui est utilisé au sein du système optique imageur nécessite pour fonctionner correctement que la température soit sensiblement homogène et stabilisée au sein du système.

La fonction d'athermalisation du dispositif de compensation thermique 3 est de maintenir nettes les images qui sont saisies par le capteur d'images matriciel 1 lorsque la température du système varie. Pour cela, le dispositif de compensation thermique 3 provoque, en fonction de la température du système, des variations de la distance entre un centre optique de la matrice imageante 2 et le capteur d'images matriciel 1. Cette distance est la longueur focale de la matrice imageante 2, notée f, et ses variations en fonction de la température sont données approximativement par la formule connue de l'Homme du métier :

$$\Delta f = \left( \alpha - \frac{1}{n-1} \cdot \frac{dn}{dT} \right) \cdot \Delta T \cdot f$$

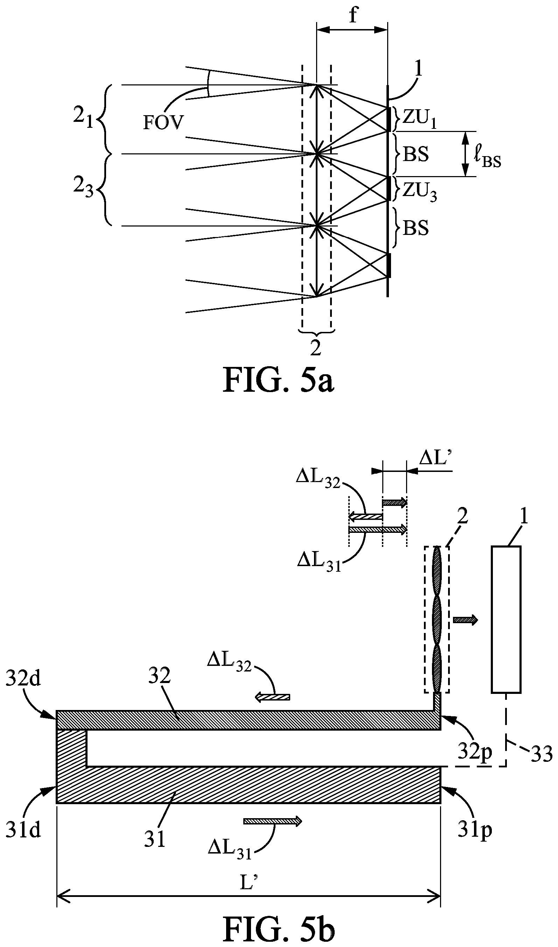

où $\alpha$ est le coefficient de dilatation thermique du matériau des matrices de lentilles 21 et 22, c'est-à-dire du germanium dans le cas présent, n est l'indice de réfraction optique de ce matériau, et T est la température du système optique imageur. Le facteur entre parenthèses est couramment appelé coefficient thermo-optique et noté $\beta$. [Fig. 5a] montre la longueur focale f du système optique imageur qui est l'objet de la présente description détaillée. Dans cette figure, la matrice imageante 2 est remplacée par une matrice unique de lentilles chacune équivalente au doublet optique de la voie optique correspondante. Le plan de cette figure est perpendiculaire à celui de [Fig. 1].

La configuration du dispositif de compensation thermique 3 qui est utilisée par l'invention est représentée dans [Fig. 5b]. Dans le plan de cette figure, qui est le même plan de section longitudinale du système que celui de [Fig. 5a], perpendiculaire à la fois à la matrice imageante 2 et au capteur d'images matriciel 1, le dispositif de compensation thermique 3 a une forme de méandre qui s'étend en amont de la matrice imageante 2, c'est-à-dire d'un côté de celle-ci qui est opposé au capteur d'images matriciel 1. Il comprend deux segments 31 et 32 qui sont constitués chacun d'un matériau différent de celui de l'autre segment, avec un écart entre les valeurs respectives de coefficient de dilatation thermique de ces deux matériaux qui est non-nul et noté $\Delta$CTE. Dans une approche simplifiée, les deux segments 31 et 32 sont parallèles, avec une longueur commune qui est notée L'. Les extrémités proximales respectives des deux segments 31 et 32 ne sont pas reliées directement l'une à l'autre. L'extrémité proximale 31p du segment 31 est connectée au capteur d'images matriciel 1 par une pièce intermédiaire 33 dont on pourra négliger les variations thermiques. L'extrémité proximale 32p du segment 32 est connectée au support 20 de la matrice imageante 2. Les deux segments 31 et 32 s'étendent en amont de la matrice imageante 2, ou en avant de celle-ci à l'opposé du capteur d'images matriciel 1, comme représenté dans [Fig. 5b], et leurs extrémités distales respectives, notées 31d et 32d sont reliées l'une à l'autre. Lorsque le dispositif de compensation thermique 3 possède une telle configuration, la variation thermique qu'il produit pour la distance de séparation entre la matrice imageante 2 et le capteur d'images matriciel 1 est :

$$\Delta L' = \Delta CTE \cdot \Delta T \cdot L'$$

L'encart dans [Fig. 5b] montre la variation thermique de la distance L' en tant que différence entre les variations de longueurs $\Delta L_{31}$ et $\Delta L_{32}$ respectives des deux segments 31 et 32 : $\Delta L' = \Delta L_{31} - \Delta L_{32}$.

Le dispositif de compensation thermique 3 est efficace pour maintenir nettes les images qui sont saisies par le capteur 1 lorsque la température du système varie, c'est-à-dire pour la fonction d'athermalisation, si $\Delta L' = \Delta f$. Deux paramètres de dimensionnement du dispositif 3 sont disponibles pour satisfaire cette condition : L' et $\Delta CTE$. Lorsqu'ils sont choisis ainsi, c'est-à-dire lorsque la condition suivante est satisfaite :

$$L' = \frac{\beta \cdot f}{\Delta CTE}$$

le système optique imageur est dit athermalisé et la condition précédente appelée condition d'athermalisation. L'intervalle thermique d'utilisation du système tel que prescrit par son fabricant, et qui a été appelé intervalle de prescription du système optique imageur dans la partie générale de la présente description, est ainsi élargi par rapport à un système dépourvu de dispositif de compensation thermique. Le dispositif de compensation thermique 3 qui vient d'être décrit est souvent qualifié de dispositif passif, car il n'utilise pas de composant actif - tel qu'un moteur ou un variateur contrôlé par l'utilisateur - pour ajuster la distance entre la matrice imageante 2 et le capteur d'images matriciel 1. La condition d'athermalisation précédente laisse un paramètre du dispositif de compensation thermique 3 qui est encore disponible pour produire une fonction additionnelle : l'écart de valeurs de coefficient de dilatation thermique $\Delta CTE$. Cette fonction additionnelle sera de supporter l'écran de vignettage 4, préférentiellement au niveau des extrémités distales 31d et 32d.

La distance qui est ainsi variable, pour la fonction d'athermalisation, entre le capteur d'images matriciel 1 et la matrice imageante 2, ainsi que la présence du hublot 1b entre ces deux composants, empêchent de disposer des murets longitudinaux de séparation entre les voies optiques qui s'étendraient à partir de la matrice imageante 2 jusqu'à la surface photosensible du capteur d'images matriciel 1. La fonction de tels murets de séparation, telle que connue avant la présente invention, est de supprimer des débordements d'images entre voies optiques voisines qui produisent des recouvrements d'images. Ces recouvrements d'images, aussi appelés superpositions d'images, apparaissent au niveau des bords d'images qui sont parallèles et voisins. Par exemple, en référence à [Fig. 5a], l'image qui est formée par la voie optique $2_1$ déborde ainsi de la zone utile $ZU_1$ qui est affectée à cette voie optique à l'intérieur du capteur d'images matriciel 1, dans la zone utile $ZU_3$ qui est affectée à la voie optique $2_3$ au-delà de la frontière entre les deux zones utiles. Dans la zone de recouvrement d'images, les informations d'images sont mélangées de sorte qu'elles ne sont plus utilisables, notamment pour détecter la présence d'un gaz recherché dans les portions du champ optique d'entrée du système qui sont concernées par ces recouvrements d'images. Il est possible de séparer les zones utiles de deux voies optiques voisines par une bande intermédiaire qui est inutilisée dans la matrice du capteur d'images matriciel 1. Une telle bande de séparation est notée BS dans [Fig. 5a], et a été appelée bande de garde dans la partie générale de la présente description. Ainsi, lorsque l'une au moins des deux images formées par les voies optiques $2_1$ et $2_3$ déborde dans la bande de séparation BS qui est intermédiaire entre les zones utiles $ZU_1$ et $ZU_3$, ce débordement n'empiète pas directement dans l'autre de ces zones utiles, tant que le débordement reste à l'intérieur de la bande de séparation BS. Néanmoins, de telles bandes de séparation sont des zones de non-utilisation de la surface photosensible du capteur d'images matriciel, et l'invention telle que décrite ci-après permet de réduire la largeur de ces bandes de séparation BS, et donc réduire le nombre de photodétecteurs (pixels) du capteur d'images matriciel 1 qui ne sont pas utilisés.

Selon l'invention, les images formées respectivement par toutes les voies optiques sur le capteur d'images matriciel 1 sont limitées par l'ouverture d'entrée $O_4$ de l'écran de vignettage 4, qui est commune à toutes ces voies optiques. De préférence, cette ouverture d'entrée $O_4$ est centrée par rapport à la matrice imageante 2 et au capteur d'images matriciel 1. L'efficacité de l'écran de vignettage 4 à supprimer les recouvrements d'images est déterminée par la dimension de son ouverture d'entrée $O_4$, et par la position des bords de cette ouverture $O_4$ en avant de la matrice imageante 2. Lorsque chaque image est ainsi limitée, les zones utiles peuvent être rapprochées, si bien que la largeur de chaque bande de séparation BS peut être réduite. Le nombre des photodétecteurs du capteur d'images matriciel 1 qui ne sont pas utilisés est diminué ainsi. Autrement dit, ce capteur présente un taux d'utilisation de sa surface photosensible qui est augmenté.

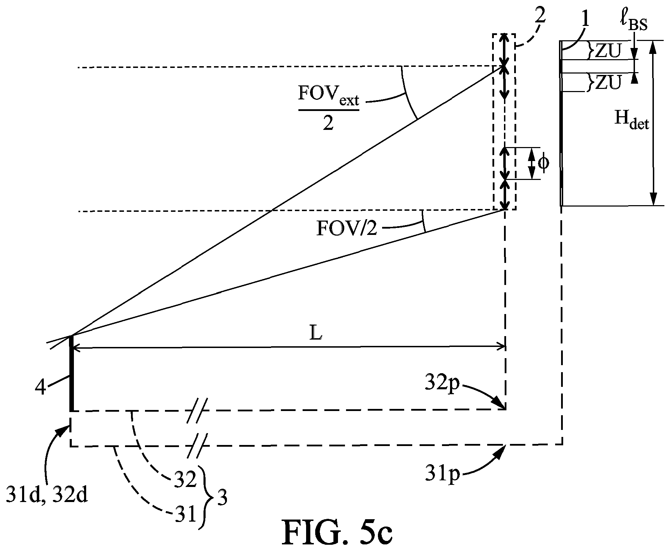

Encore selon l'invention, le dispositif de compensation thermique 3 est utilisé en outre pour supporter l'écran de vignettage 4. Le paramètre disponible restant du dispositif de compensation thermique 3, ou un de ses paramètres restant disponibles lorsqu'il comporte plus de deux matériaux aux valeurs différentes du coefficient de dilatation thermique, est alors utilisé pour ajuster la position de l'écran de vignettage 4 en avant de la matrice imageante 2. Une telle sélection pour le paramètre $\Delta CTE$, dans la suite de l'athermalisation du système optique imageur qui a été présentée plus haut en référence à [Fig. 5b], est décrite maintenant en référence à [Fig. 5c].

[Fig. 5c] est tracée dans un plan de section longitudinale du système qui est parallèle aux lignes ou aux colonnes de la matrice imageante 2, par exemple encore le plan de [Fig. 5a] et [Fig. 5b]. On suppose que la matrice imageante 2 possède N voies optiques qui sont juxtaposées dans ce plan de section longitudinale, N étant un nombre entier supérieur ou égal à 2, de préférence égal à 2 ou 3, en général inférieur ou égal à 4. En adoptant les notations suivantes :

$H_{det}$ pour la taille du capteur d'images matriciel 1 dans le plan de section longitudinale,
$l_{BS}$ pour la largeur des bandes de séparation BS, supposées toutes égales entre elles, et
FOV pour le champ de vue utile du système pour toutes les voies optiques dans le plan de section longitudinale considéré,

la taille d'une zone utile quelconque ZU dans ce plan de section longitudinale est $2 \cdot f \cdot \tan(FOV/2)$, où $\tan(\cdot)$ est la fonction tangente, et :

$$H_{det} = N \cdot 2 \cdot f \cdot \tan\left(\frac{FOV}{2}\right) + (N-1) \cdot l_{BS}$$

Le champ de vue utile FOV est commun à toutes les voies optiques, et une image de son contenu est formée séparément par chaque voie optique dans la zone utile ZU du capteur d'images matriciel 1 qui est dédiée à cette voie optique.

Le recouvrement d'images est le plus critique entre les deux premières ou les deux dernières zones utiles du capteur d'images matriciel 1, en comptant les zones utiles à l'intérieur du plan de section longitudinale considéré, progressivement à partir d'un bord du capteur 1 jusqu'à son bord opposé. Autrement dit, des recouvrements d'images se produisent en premier lieu entre les deux premières voies optiques ou entre les (N-1)$^{ème}$ et N$^{ème}$ voies optiques. En notant FOV$_{ext}$ le champ de vue extrême de la deuxième voie optique, qui définit le recouvrement d'images maximal avec la première voie optique sans dépasser de la bande de séparation intermédiaire dans la zone utile de cette première voie optique, ou par symétrie le champ de vue extrême de la (N-1)$^{ème}$ voie optique qui définit le recouvrement d'images maximal avec la N$^{ème}$ voie optique, il vient d'après [Fig. 5c] :

$$L = \frac{(N-1)\Phi}{\tan\left(\frac{FOV_{ext}}{2}\right) - \tan\left(\frac{FOV}{2}\right)}$$

où L est la distance en avant de la matrice imageante 2 à laquelle se trouve l'écran de vignettage 4, et $\Phi$ est un diamètre pupillaire individuel des voies optiques, supposé identique pour toutes les voies optiques. Dans une réalisation optimisée du système optique imageur, deux voies optiques qui sont voisines sont supposées contigües au sein de la matrice imageante 2, c'est-à-dire que les pupilles respectives des voies optiques sont jointives. Simultanément, par définition du champ de vue extrême FOV$_{ext}$, l'équation suivante correspond à la bande de séparation BS entre les deux premières ou les deux dernières zones utiles ZU à l'intérieur du plan de section longitudinale :

$$l_{BS} = f \cdot \left[\tan\left(\frac{FOV_{ext}}{2}\right) - \tan\left(\frac{FOV}{2}\right)\right]$$

En éliminant $\tan(FOV_{ext}/2)$ entre les deux équations précédentes, et sachant que le diamètre pupillaire $\Phi$ est égal à f/F# où F# est le nombre d'ouverture du système pour chaque voie optique, et en utilisant en plus l'expression de $H_{det}$ qui a été donnée plus haut, il vient :

$$L = \frac{(N-1) \cdot [H_{det} - (N-1) \cdot l_{BS}]^2}{F\# \cdot l_{BS} \cdot N^2 \cdot 4 \cdot \tan^2\left(\frac{FOV}{2}\right)}$$

Cette équation, de nature purement optique et géométrique, fournit la distance L à laquelle doit se trouver l'écran de vignettage 4 en avant de la matrice imageante 2 pour éviter des recouvrements d'images à l'intérieur des zones utiles du capteur d'images matriciel 1. Elle a été obtenue pour le débordement de l'image formée par la deuxième voie optique dans la zone utile de la première voie optique.

Dans des modes de réalisation préférés de l'invention qui réduisent l'encombrement du système complet, l'écran de vignettage 4 peut être supporté par les extrémités distales 31d et 32d des segments 31 et 32 du dispositif de compensation thermique 3 tel que représenté dans [Fig. 5b], ces extrémités distales 31d et 32d étant reliées l'une à l'autre. Autrement dit : L = L'. Alors, le paramètre disponible restant $\Delta$CTE est donné par l'équation :

$$\frac{(N-1)\cdot[H_{det}-(N-1)\cdot l_{BS}]}{F\#\cdot l_{BS}\cdot N\cdot 2\cdot \tan\left(\dfrac{FOV}{2}\right)}=\frac{1}{\Delta CTE}\cdot\left(\alpha-\frac{1}{n-1}\cdot\frac{dn}{dT}\right)$$

Dans ces conditions, la longueur du dispositif de compensation thermique 3 en avant de la matrice imageante 2 correspond à la position pour l'écran de vignettage 4 afin de supprimer les recouvrements d'images dans les zones utiles. Le système optique imageur à plusieurs voies optiques présente alors une compacité maximale.

A titre d'exemple, les valeurs numériques suivantes peuvent être adoptées :

- le capteur d'images matriciel 1 peut avoir une dimension de 1024 colonnes par 768 lignes, avec un pas de lignes et de colonnes qui est égal à 17 $\mu$m, correspondant à une taille de capteur de $H_{det}$=17,4 mm (millimètre) par 13,1 mm ;
- trois voies optiques peuvent être juxtaposées dans la longueur de ce capteur d'images matriciel 1 : N=3 ;
- chaque bande de séparation BS peut correspondre à 130 colonnes adjacentes du capteur d'images matriciel 1, correspondant à $l_{BS}$=2,21 mm ;
- le champ de vue utile FOV peut être égal à 30° (degré) pour chaque voie optique ;
- le nombre d'ouverture F# peut être égal 1,2 aussi pour chaque voie optique ; et
- les deux matrices de lentilles 21 et 22 peuvent être en germanium.

Pour ces valeurs numériques, les paramètres du dispositif de compensation thermique 3 sont L = L' = 40 mm et $\Delta CTE$=20,5 $\mu$m·m$^{-1}$·°C$^{-1}$. Cette valeur pour $\Delta CTE$ peut être obtenue en utilisant l'aluminium et l'alliage qui est désigné commercialement par Invar®, séparément pour l'un et l'autre des deux segments 31 et 32 du dispositif de compensation thermique 3. Le quotient L/f de la distance L par la longueur focale f est alors égal à 5,6. Dans ces conditions, l'intervalle thermique de prescription peut être de -40°C à +60°C. Pour d'autres réalisations dans lesquelles les segments 31 et 32 sont l'un en aluminium et l'autre en polymère ABS, pour acrylonitrile butadiène styrène, le quotient L/f peut être égal à 1,8.

Il est répété que le modèle mathématique qui vient d'être présenté est simplifié, et n'a pour but que de montrer le principe de l'invention. L'Homme du métier saura le perfectionner pour le rendre plus exact, en tenant compte de détails concrets de réalisation du système optique imageur.

Par ailleurs, il est possible de placer l'écran de vignettage 4 à des niveaux dans la longueur du dispositif de compensation thermique 3 qui sont différents de celui des extrémités distales 31d et 32d. L'utilisation de l'invention aboutit alors à des valeurs pour le paramètre $\Delta CTE$ qui sont différentes de celle qui résulte de la dernière équation ci-dessus, mais la déduction de ces valeurs est à la portée de l'Homme du métier une fois qu'il a fixé la géométrie du dispositif de compensation thermique 3 par rapport à la matrice imageante 2 et à l'écran de vignettage 4. Enfin, le dispositif de compensation thermique 3 peut être constitué de plus de deux segments dont les variations de longueur se combinent pour produire l'athermalisation, tout en supportant l'écran de vignettage 4 à une position appropriée pour supprimer les recouvrements d'images à l'intérieur des zones utiles. Des paramètres supplémentaires sont alors disponibles, qui peuvent faciliter l'utilisation de l'invention pour des applications particulières.

Enfin, il est entendu que l'invention peut être reproduite en modifiant encore d'autres aspects secondaires du mode de réalisation simplifié qui a été décrit en détail ci-dessus, tout en conservant certains au moins des avantages cités. Notamment, un système optique imageur conforme à l'invention peut être utilisé dans d'autres applications que la recherche d'un ou plusieurs gaz dans un environnement. En outre, toutes les valeurs numériques qui ont été citées ne l'ont été qu'à titre d'illustration, et peuvent être changées en fonction de l'application considérée.

**Revendications**

1. Système optique imageur comprenant plusieurs voies optiques ($2_1$, $2_2$) disposées en parallèle, et destiné à fonctionner lorsqu'une température du système est comprise dans un intervalle de prescription, ledit système comprenant :

    - un capteur d'images matriciel (1) ; et
    - une matrice imageante (2), comprenant plusieurs optiques imageantes qui sont disposées en parallèle et adaptées pour former simultanément, dans des zones utiles (ZU) du capteur d'images matriciel (1) qui sont dédiées une-à-une aux optiques imageantes, des images respectives d'une scène contenue dans un champ optique d'entrée qui est identique pour toutes lesdites optiques imageantes, les zones utiles du capteur d'images étant disjointes et chaque optique imageante avec la zone utile correspondante appartenant à une des voies optiques du système séparément de chaque autre voie optique ;
    le système optique imageur étant **caractérisé en ce qu'**il comprend en outre :

- un dispositif de compensation thermique (3), disposé pour produire un écartement variable entre la matrice imageante (2) et le capteur d'images matriciel (1), et comprenant, dans au moins un plan de section longitudinale qui est perpendiculaire à la matrice imageante et au capteur d'images matriciel, un méandre composé de deux segments (31, 32) comprenant chacun un matériau dont une valeur de coefficient de dilatation thermique est différente de celle pour l'autre segment, les deux segments étant reliés l'un à l'autre par des extrémités distales (31d, 32d) respectives desdits segments, une extrémité proximale (32p) de l'un des segments étant reliée à la matrice imageante et une extrémité proximale (31p) de l'autre des segments étant reliée au capteur d'images matriciel, une différence entre lesdites valeurs de coefficient de dilatation thermique et des longueurs respectives des deux segments étant adaptées pour produire l'écartement variable entre la matrice imageante et le capteur d'images matriciel de sorte que les images qui sont formées dans les zones utiles (ZU) dudit capteur d'images matriciel soient nettes lorsque la température du système a une valeur quelconque à l'intérieur de l'intervalle de prescription ; et

- un écran de vignettage (4), disposé en amont de la matrice imageante (2) par rapport à un sens de propagation d'un rayonnement qui entre dans le système pour former les images, l'écran de vignettage possédant une ouverture ($O_4$) pour le rayonnement qui est commune aux voies optiques ($2_1, 2_2$) du système,

et **en ce que** l'ouverture ($O_4$) de l'écran de vignettage (4) est dimensionnée pour limiter latéralement un éclairement dans chaque image qui est formée par l'une quelconque des voies optiques, dite voie optique considérée, afin d'éviter que ladite image déborde dans la zone utile (ZU) d'une autre des voies optiques, voisine de ladite voie optique considérée,

empêchant ainsi toute superposition d'images dans toutes les zones utiles, pour n'importe quelle valeur de la température du système dans l'intervalle de prescription,

et **en ce qu'**en outre les extrémités distales (31d, 32d) des segments (31, 32) du dispositif de compensation thermique (3) sont situées en amont de la matrice imageante (2) par rapport au sens de propagation du rayonnement qui entre dans le système pour former les images,

et l'écran de vignettage (4) est supporté par le dispositif de compensation thermique (3) en amont de la matrice imageante (2), aussi par rapport au sens de propagation du rayonnement qui entre dans le système pour former les images.

2. Système optique imageur selon la revendication 1, dans lequel l'écran de vignettage (4) est supporté par le dispositif de compensation thermique (3) au niveau des extrémités distales (31d, 32d) des segments (31, 32) dudit dispositif de compensation thermique.

3. Système optique imageur selon la revendication 1 ou 2, dans lequel une distance de séparation entre l'écran de vignettage (4) et la matrice imageante (2), mesurée parallèlement à une direction commune d'axes optiques respectifs des optiques imageantes, est comprise entre 1,0 fois et 6,0 fois une valeur moyenne des longueurs focales des optiques imageantes.

4. Système optique imageur selon l'une quelconque des revendications précédentes, comprenant en outre une enceinte (1a) qui est disposée pour contenir le capteur d'images matriciel (1), ladite enceinte étant munie d'un hublot (1b) qui est transparent au rayonnement qui forme les images, et qui est situé entre la matrice imageante (2) et le capteur d'images matriciel.

5. Système optique imageur selon l'une quelconque des revendications précédentes, dans lequel les optiques imageantes ont un agencement en lignes et colonnes dans la matrice imageante (2), chaque ligne étant perpendiculaire à chaque colonne, et la matrice imageante est orientée de sorte que chaque ligne d'optiques imageantes soit parallèle à une direction de ligne ou de colonne de photodétecteurs du capteur d'images matriciel (1).

6. Système optique imageur selon la revendication 5, dans lequel l'agencement en lignes et colonnes des optiques imageantes dans la matrice imageante (2) est de l'une des dimensions suivantes : 1 x 2, 2 x 1, 2 x 2, 2 x 3, 3 x 2, 3 x 3, 2 x 4, 4 x 2, 3 x 4, 4 x 3 et 4 x 4.

7. Système optique imageur selon l'une quelconque des revendications précédentes, dans lequel chaque optique imageante comprend au moins une lentille ($21_1, 21_2, 22_1, 22_2$) à base de germanium.

8. Système optique imageur selon l'une quelconque des revendications précédentes, dans lequel chaque optique imageante comprend un filtre spectral ($23_1, 23_2$), et les filtres spectraux de deux des optiques imageantes qui sont distinctes dans la matrice imageante (2) déterminent des fenêtres de transmission spectrale qui sont différentes.

9. Procédé pour saisir plusieurs images associées à un champ optique d'entrée qui est identique pour toutes lesdites images, le procédé étant mis en œuvre en utilisant un système optique imageur qui est conforme à l'une quelconque des revendications précédentes.

10. Procédé selon la revendication 9, qui est destiné à révéler une présence d'un gaz à l'intérieur du champ optique d'entrée, et suivant lequel le système optique imageur est conforme à la revendication 8, les filtres spectraux ($23_1$, $23_2$) étant sélectionnés de sorte que la fenêtre de transmission spectrale d'au moins un des filtres spectraux soit dans une bande de transparence du gaz, et la fenêtre de transmission spectrale d'au moins un autre desdits filtres spectraux soit dans une bande d'absorption dudit gaz.

11. Procédé selon la revendication 9 ou 10, dans lequel le gaz est du gaz naturel, ou un gaz d'hydrocarbure(s), ou un gaz toxique, ou un gaz à effet de serre.

**Patentansprüche**

1. Optisches Abbildungssystem, umfassend mehrere optische Kanäle ($2_1$, $2_2$), die parallel angeordnet und dazu bestimmt sind, zu arbeiten, wenn eine Temperatur des Systems innerhalb eines vorgeschriebenen Intervalls liegt, wobei das System umfasst:

- einen Matrixbildsensor (1); und
- eine Abbildungsmatrix (2), umfassend mehrere Abbildungsoptiken, die parallel angeordnet und dazu geeignet sind, in Nutzzonen (ZU) des Matrixbildsensors (1), die einzeln den Abbildungsoptiken zugeordnet sind, gleichzeitig jeweilige Bilder einer Szene zu erzeugen, die in einem für alle Abbildungsoptiken identischen optischen Eingangsfeld enthalten ist, wobei die Nutzzonen des Bildsensors abgetrennt sind und jede Abbildungsoptik mit der entsprechenden Nutzzone, getrennt von jedem anderen optischen Kanal, zu einem der optischen Kanäle des Systems gehört;
wobei das optische Abbildungssystem **dadurch gekennzeichnet ist, dass** es ferner umfasst:

- eine Wärmekompensationsvorrichtung (3), die dazu angeordnet ist, einen variablen Abstand zwischen der Abbildungsmatrix (2) und dem Matrixbildsensor (1) zu erzeugen und in mindestens einer Längsschnittebene, die senkrecht zur Abbildungsmatrix und zum Matrixbildsensor verläuft, einen Mäander umfasst, der aus zwei Segmenten (31, 32) besteht, die jeweils ein Material mit einem anderen Wärmeausdehnungskoeffizienten als das andere Segment umfassen, wobei die beiden Segmente durch ihre jeweiligen distalen Enden (31d, 32d) miteinander verbunden sind, wobei ein proximales Ende (32p) eines der Segmente mit der Abbildungsmatrix verbunden ist und ein proximales Ende (31p) des anderen Segments mit dem Matrixbildsensor verbunden ist, wobei eine Differenz zwischen den Werten der Wärmeausdehnungskoeffizienten und den jeweiligen Längen der beiden Segmente dazu angepasst ist, den variablen Abstand zwischen der Abbildungsmatrix und dem Matrixbildsensor herzustellen, sodass die in den Nutzzonen (ZU) des Matrixbildsensors erzeugten Bilder klar sind, wenn die Systemtemperatur einen beliebigen Wert innerhalb des vorgeschriebenen Intervalls aufweist; und
- einen Vignettierungsbildschirm (4), der in Bezug auf eine Ausbreitungsrichtung der Strahlung, die in das System eintritt, um die Bilder zu erzeugen, der Abbildungsmatrix (2) vorgelagert ist, wobei der Vignettierungsbildschirm eine Öffnung ($O_4$) für die den optischen Kanälen ($2_1$, $2_2$) des Systems gemeinsame Strahlung aufweist,

und dass die Öffnung ($O_4$) des Vignettierungsbildschirms (4) so bemessen ist, dass die Beleuchtung in jedem Bild, das von einem beliebigen der optischen Kanäle, dem sogenannten betrachteten optischen Kanal, erzeugt wird, seitlich begrenzt wird, um zu verhindern, dass das Bild in die Nutzzone (ZU) eines anderen der optischen Kanäle, der an den betrachteten optischen Kanal angrenzt, überläuft, wodurch jede Überlagerung von Bildern in allen Nutzzonen für jeden Temperaturwert des Systems im vorgeschriebenen Intervall verhindert wird,
und dass außerdem die distalen Enden (31d, 32d) der Segmente (31, 32) der Wärmekompensationsvorrichtung (3) in Bezug auf die Ausbreitungsrichtung der Strahlung, die in das System eintritt, um die Bilder zu erzeugen, der Abbildungsmatrix (2) vorgelagert sind,
und der Vignettierungsbildschirm (4) durch die der Abbildungsmatrix (2) vorgelagerte Wärmekompensationsvorrichtung (3), auch in Bezug auf die Ausbreitungsrichtung der Strahlung, die in das System eintritt, um die Bilder zu erzeugen, getragen wird.

**2.** Optisches Abbildungssystem nach Anspruch 1, wobei der Vignettierungsbildschirm (4) durch die Wärmekompensationsvorrichtung (3) an den distalen Enden (31d, 32d) der Segmente (31, 32) der Wärmekompensationsvorrichtung getragen wird.

**3.** Optisches Abbildungssystem nach Anspruch 1 oder 2, wobei ein Trennungsabstand zwischen dem Vignettierungsbildschirm (4) und der Abbildungsmatrix (2), gemessen parallel zu einer gemeinsamen Richtung der jeweiligen optischen Achsen der Abbildungsoptiken, zwischen dem 1,0-fachen und dem 6,0-fachen eines Durchschnittswerts der Brennweiten der Abbildungsoptiken beträgt.

**4.** Optisches Abbildungssystem nach einem der vorhergehenden Ansprüche, ferner umfassend ein Gehäuse (1a), das so angeordnet ist, dass es den Matrixbildsensor (1) enthält, wobei das Gehäuse mit einer Öffnung (1b) versehen 3 ist, die für die Strahlung, die die Bilder erzeugt, durchlässig ist und sich zwischen der Abbildungsmatrix (2) und dem Matrixbildsensor befindet.

**5.** Optisches Abbildungssystem nach einem der vorhergehenden Ansprüche, wobei die Abbildungsoptiken in der Abbildungsmatrix (2) eine Zeilen- und Spaltenanordnung aufweisen, wobei jede Zeile senkrecht zu jeder Spalte steht, und die Abbildungsmatrix so ausgerichtet ist, dass jede Zeile der Abbildungsoptiken parallel zu einer Zeilen- oder Spaltenrichtung der Fotodetektoren des Matrixbildsensors (1) ist.

**6.** Optisches Abbildungssystem nach Anspruch 5, wobei die Zeilen- und Spaltenanordnung der Abbildungsoptiken in der Abbildungsmatrix (2) eine der folgenden Abmessungen aufweist: 1 x 2, 2 x 1, 2 x 2, 2 x 3, 3 x 2, 3 x 3, 2 x 4, 4 x 2, 3 x 4, 4 x 3 und 4 x 4.

**7.** Optisches Abbildungssystem nach einem der vorhergehenden Ansprüche, wobei jede Abbildungsoptik mindestens eine Linse ($21_1$, $21_2$, $22_1$, $22_2$) auf Germaniumbasis umfasst.

**8.** Optisches Abbildungssystem nach einem der vorhergehenden Ansprüche, wobei jede Abbildungsoptik einen Spektralfilter ($23_1$, $23_2$) umfasst, und die Spektralfilter von zwei der Abbildungsoptiken, die sich in der Abbildungsmatrix (2) unterscheiden, unterschiedliche spektrale Transmissionsfenster bestimmen.

**9.** Verfahren zum Aufnehmen mehrerer Bilder, die einem optischen Eingangsfeld zugeordnet sind, das für alle Bilder identisch ist, wobei das Verfahren unter Verwendung eines optischen Abbildungssystems nach einem der vorhergehenden Ansprüche durchgeführt wird.

**10.** Verfahren nach Anspruch 9, das dazu bestimmt ist, das Vorhandensein eines Gases innerhalb des optischen Eingangsfeldes aufzudecken, und gemäß dem das optische Abbildungssystem Anspruch 8 entspricht, wobei die Spektralfilter ($23_1$, $23_2$) so ausgewählt sind, dass das spektrale Transmissionsfenster von mindestens einem der Spektralfilter in einem Transparenzband des Gases liegt und das spektrale Transmissionsfenster von mindestens einem anderen der Spektralfilter in einem Absorptionsband des Gases liegt.

**11.** Verfahren nach Anspruch 9 oder 10, wobei das Gas Erdgas, ein Kohlenwasserstoffgas, ein giftiges Gas oder ein Treibhausgas ist.

**Claims**

**1.** An optical imaging system comprising several optical pathways ($2_1$, $2_2$2. arranged in parallel, and for operation when a temperature of the system is included in a prescription interval, said system comprising:

- a matrix image sensor (1); and
- an imaging matrix (2), comprising several imaging optics which are disposed in parallel and adapted to form simultaneously, in useful zones (ZU) of the matrix image sensor (1) which are dedicated one-to-one to the imaging optics, respective images of a scene contained in an input optical field which is identical for all said imaging optics, the useful zones of the image sensor being disjoint and each imaging optic with the corresponding useful zone belonging to one of the optical pathways of the system separately from each other optical pathway; the optical imaging system being **characterised in that** it further comprises:

- a thermal compensation device (3), disposed to produce a variable spacing between the imaging matrix (2) and the matrix image sensor (1), and comprising, in at least one longitudinal cross-sectional plane which is perpendicular to the imaging matrix and to the matrix image sensor, a meander comprised of two segments (31, 32) each comprising a material whose thermal expansion coefficient value is different from that for the other segment, the two segments being connected to each other by respective distal ends (31d, 32d) of said segments, a proximal end (32p) of one of the segments being connected to the imaging matrix and a proximal end (31p) of the other of the segments being connected to the matrix image sensor, a difference between said thermal expansion coefficient values and respective lengths of the two segments being adapted to produce the variable spacing between the imaging matrix and the matrix image sensor so that images formed in the useful zones (ZU) of said matrix image sensor are sharp when the temperature of the system has any value inside the prescription interval; and

- a baffle (4), disposed upstream of the imaging matrix (2) with respect to a direction of propagation of a radiation that enters the system to form images, the baffle having an aperture ($O_4$) for the radiation that is common to the optical pathways (21, 22) of the system, and **in that** the aperture ($O_4$) of the baffle (4) is dimensioned to laterally limit lighting in each image which is formed by any of the optical pathways, referred to as the optical pathway under consideration, in order to avoid said image overflowing into the useful zone (ZU) of another of the optical pathways, next to said optical pathway under consideration, thus preventing any superimposition of images in all the useful zones, for any value of the temperature of the system in the prescription interval,

and further **in that** the distal ends (31d, 32d) of the segments (31, 32) of the thermal compensation device (3) are located upstream of the imaging matrix (2) with respect to the direction of propagation of the radiation which enters the system to form images,

and the baffle (4) is supported by the thermal compensation device (3) upstream of the imaging matrix (2), also with respect to the direction of propagation of the radiation entering the system to form images.

2. The optical imaging system according to claim 1, wherein the baffle (4) is supported by the thermal compensation device (3) at the distal ends (31d, 32d) of the segments (31, 32) of said thermal compensation device.

3. The optical imaging system according to claim 1 or 2, wherein a separation distance between the baffle (4) and the imaging matrix (2), measured in parallel to a common direction of respective optical axes of the imaging optics, is between 1.0 times and 6.0 times a mean value of the focal lengths of the imaging optics.

4. The optical imaging system according to any of the preceding claims, further comprising an enclosure (1a) which is disposed to contain the matrix image sensor (1), said enclosure being provided with a window (1b) which is transparent to the radiation which forms images, and which is located between the imaging matrix (2) and the matrix image sensor.

5. The optical imaging system according to any of the preceding claims, wherein the imaging optics have a row and column arrangement in the imaging matrix (2), each row being perpendicular to each column, and the imaging matrix is oriented such that each row of imaging optics is parallel to a row or column direction of photodetectors of the matrix image sensor (1).

6. The optical imaging system according to claim 5, wherein the row and column arrangement of the imaging optics in the imaging matrix (2) is of one of the following dimensions: 1 x 2, 2 x 1, 2 x 2, 2 x 3, 3 x 2, 3 x 3, 2 x 4, 4 x 2, 3 x 4, 4 x 3 and 4 x 4.

7. The optical imaging system according to any of the preceding claims, wherein each optical imaging system comprises at least one germanium-based lens ($21_1$, $21_2$, $22_1$, $22_2$).

8. The optical imaging system according to any of the preceding claims, wherein each imaging optic comprises a spectral filter ($23_1$, $23_2$), and the spectral filters of two of the imaging optics that are distinct in the imaging matrix (2) determine spectral transmission windows that are different.

9. A method for capturing several images associated with an input optical field which is identical for all said images, the method being implemented using an optical imaging system which is in accordance with any of the preceding claims.

10. The method according to claim 9, which is intended to reveal presence of a gas inside the input optical field, and wherein the optical imaging system is in accordance with claim 8, the spectral filters ($23_1$, $23_2$) being selected such that the spectral transmission window of at least one of the spectral filters is in a transparency band of the gas, and the spectral transmission window of at least one other of said spectral filters is in an absorption band of said gas.

11. The method according to claim 9 or 10, wherein the gas is natural gas, or a hydrocarbon gas, or a toxic gas, or a greenhouse gas.

FIG. 1

FIG. 2

**FIG. 3**

**FIG. 4**

FIG. 5a

FIG. 5b

FIG. 5c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10375327 B2
- US 20180191967 A1

- US 2012344851 A

**Littérature non-brevet citée dans la description**

- **J. TANIDA et al.** Thin observation module by bound optics (TOMBO) : concept and experimental verification. *Appl. Opt.*, 2001, vol. 40, 1806-1813